# FASCICULE DE BREVET EUROPEEN

(11) **EP 0 642 704 B1**
(45) Date de publication et mention de la délivrance du brevet: **21.08.1996**
(21) Numéro de dépôt: 92902734.0
(22) Date de dépôt: 16.12.1991
(51) Int. Cl.: H02K 21/24, H02K 5/173, H02K 7/08

(54) **ACTIONNEUR ELECTROMAGNETIQUE MONOPHASE ROTATIF**
DREHENDES ELEKTROMAGNETISCHES EINPHASENBETÄTIGUNGSORGAN
ROTATABLE SINGLE-PHASE ELECTROMAGNETIC ACTUATOR

(30) Priorité: 17.12.1990 FR 9015782
(43) Date de publication de la demande: 15.03.1995
(73) Titulaire: MOVING MAGNET TECHNOLOGIES S.A., F-25000 Besançon (FR)
(72) Inventeur: OUDET, Claude, F-25000 Besançon (FR); PRUDHAM, Daniel, F-25220 Thise (FR)
(74) Mandataire: Kopacz, William James
(86) Numéro de dépôt international: FR9101012
(87) Numéro de publication internationale: WO9211686

(56) Documents cités:
- CH-A- 564 757
- DE-C- 910 798
- DE-C- 923 016

## Description

La présente invention concerne un actionneur électromagnétique monophasé rotatif.

On connaît dans l'état de la technique de nombreux types d'actionneurs monophasés rotatifs comportant un organe fixe constitué par un premier circuit magnétique statorique réalisé en un matériau de très haute perméabilité magnétique excité par au moins une bobine d'excitation et un organe mobile constitué par un disque aimanté axialement. Ce disque aimanté présente 2N paires de pôles magnétiques aimantés en sens alterné. L'aimantation est pratiquement uniforme. Le disque aimanté est accolé à un second circuit magnétique réalisé en un matériau de haute perméabilité magnétique. l'organe mobile est muni d'un axe d'accouplement destiné à transmettre le couple.

A titre d'exemple, de tels actionneurs sont décrits dans la demande de brevet français FR2648632 de la demanderesse.

Compte tenu de la miniaturisation des actionneurs, de la précision et de la fiabilité requise par la plupart des applications, le positionnement de l'organe mobile est critique. En conséquence, on à proposé dans l'état de l'art différentes solutions mécaniques permettant le positionnement précis de l'axe et/ou du rotor. Le principe constant de ces solutions consiste à réduire autant que possible le jeu entre l'axe et une structure d'assemblage de l'actionneur.

On connaît également dans l'état de la technique une machine décrite dans le brevet DE-C-923016. Cette machine est un générateur qui comporte un premier circuit magnétique excité par une bobine ainsi qu'un second circuit magnétique séparée du premier par un entrefer axial et comportant un aimant permanent. L'aimant permanent présente des protubérances coulissant entre des parois lui permettant d'avoir un jeu axial.

Ces solutions présentent en outre différents inconvénients : tout d'abord, il s'agit de solutions coûteuses, faisant appel à des systèmes mécaniques de haute précision constituant des pièces mobiles ou d'usures susceptibles de réduire la durée de vie et/ou la fiabilité de l'actionneur ainsi réalisé.

Les solutions connues dans l'art antérieur se traduisent par une grande rigidité de l'ensemble. Or, les actionneurs sont destinés à être accouplés à des ensembles mécaniques pouvant présenter un décentrage ou des défauts d'alignements divers. L'absence de toute souplesse intrinsèque à l'actionneur impose donc dans certain cas le recours à des accouplements souples ou flexibles dont l'encombrement et le prix de revient peuvent poser des difficultés.

L'objet de la présente invention est de remédier à ces inconvénients en proposant une solution surprenante pour l'Homme du Métier.

L'invention faisant l'objet de la présente demande de brevet concerne à cet effet un actionneur caractérisé en ce que la liaison entre l'organe fixe et l'organe mobile autorise au moins un déplacement axial de l'organe mobile dans la direction opposée à l'organe statorique fixe et en ce que le diamètre du disque aimanté est sensiblement identique au diamètre des deux circuits magnétiques. Le maintien axial de l'organe mobile est assuré par les forces d'attraction magnétique entre l'organe fixe et l'organe mobile, forces qui s'avèrent suffisantes pour assurer un fonctionnement satisfaisant de l'actionneur ainsi réalisé, et confèrent à l'actionneur une souplesse suffisante pour absorber les défauts d'alignement correspondant aux tolérances d'assemblage et/ou de fabrication. Les moyens de solidarisation mécanique de l'organe mobile et de la partie fixe de l'actionneur sont conçus de façon à laisser subsister, en l'absence d'attraction magnétique, un jeu dont l'ordre de grandeur correspond à la distance entre la surface de l'aimant mobile et la surface de la partie statorique fixe. Pour des actionneurs dont le diamètre est de l'ordre du centimètre, ce jeu mécanique axial est de plusieurs dixième de millimètres. Un tel jeu serait inacceptable s'il n'était pas compensé. Une particularité importante de l'actionneur selon l'invention est donc l'absence de pièce mécanique assurant à elle seule le positionnement précis de l'organe mobile, et par conséquent la définition exacte de l'entrefer. Dans les actionneurs selon l'invention, ce positionnement est assuré par la conjugaison des phénomènes magnétiques exerçant une force d'attraction axiale de l'organe mobile vers la partie statorique fixe et un centrage latéral d'une part, et de l'action d'une butée autorisant un degré de liberté de rotation et limitant le mouvement axial de l'organe mobile vers la partie statorique fixe d'autre part. Cette butée est constituée par une butée à bille, un roulement oblique démontable ou tout autre moyen mécanique équivalant, apte à autoriser un degré de liberté en rotation et présentant une fonction de butée axiale.

Selon un mode de réalisation avantageux, la liaison entre l'organe fixe et l'organe mobile autorise en outre un déplacement radial de l'axe d'accouplement sous l'effet d'efforts parasites liés aux tolérances de fabrication et d'accouplement à la charge.

Cette solution surprenante pour l'Homme de Métier qui chercherait plutôt à parfaire le guidage de l'organe mobile, permet d'obtenir un autocentrage de l'organe mobile, puissant et efficace en l'absence de toute pièce mécanique hormis une butée empêchant le collage de l'organe mobile sur l'organe fixe. Les forces magnétiques tendent à provoquer le retour en position centrée de l'organe mobile malgré l'absence de moyens de guidage ou de rappel mécanique et à compenser ainsi les déplacements tant angulaires que parallèles dus aux tolérances de fabrication de l'actionneur et d'accouplement avec la charge.

Selon cette caractéristique, l'axe géométrique du rotor, et par conséquent de l'axe d'accouplement, présente une souplesse suffisante pour compenser des défauts d'alignement avec l'arbre récepteur.

De préférence, l'organe mobile coopère avec l'organe fixe par l'intermédiaire d'une butée à bille limitant le déplacement de l'organe mobile en direction de l'organe fixe, ou par l'intermédiaire d'un roulement à contact oblique démontable. un roulement à contact oblique démontable présente une capacité de charge axiale comparable à la capacité de charge axiale d'une butée à bille de dimension équivalente, mais bloque toutes possibilités de jeu latéral.

Selon une première variante, l'une des surfaces extérieures de la butée à bille est sensiblement coplanaire avec le plan passant par l'extrémité des pôles statoriques, le disque comportant un évidement central d'une section au moins égale à la section de la butée à bille. Ce mode de réalisation permet de réduire l'encombrement de l'actionneur. En outre, il évite le recours à un axe traversant la partie fixe, ce qui permet de simplifier le bobinage du circuit magnétique fixe.

De préférence, l'extrémité supérieure des pôles statoriques de l'organe fixe présente un alésage sensiblement cylindrique dans lequel est placé une pièce de liaison en un matériau non magnétique, ladite pièce de liaison coopérant avec la butée à billes. L'alésage ainsi réalisé définit des segments en forme de secteurs annulaires constituant un support de la pièce de liaison.

Selon une variante particulière, l'axe d'accouplement traverse l'organe fixe. L'organe fixe présente du côté de la sortie de l'axe d'accouplement un ou plusieurs taraudages facilitant la solidarisation de l'actionneur avec un support mécanique. Toutefois, la bobine d'excitation pour l'actionneur selon cette variante est plus difficile à réaliser.

D'autres modes de réalisation et avantages ressortiront mieux de la description d'un exemple non limitatif d'un actionneur selon la présente invention, s'appuyant sur les dessins où :
- la figure 1 représente une vue en coupe axiale de l'actionneur selon l'invention ;
- la figure 2 représente une vue en coupe transversale ;
- la figure 3 représente une vue de l'actionneur lorsqu'une force latérale s'exerce sur l'axe ;
- la figure 4 représente une vue en coupe axiale d'une variante de réalisation ;
- la figure 5 représente une vue en coupe transversale de l'actionneur selon la variante précédente ;
- la figure 6 représente une vue en coupe axiale d'une troisième variante ;
- la figure 7 représente une vue en coupe transversal de la variante précédente.

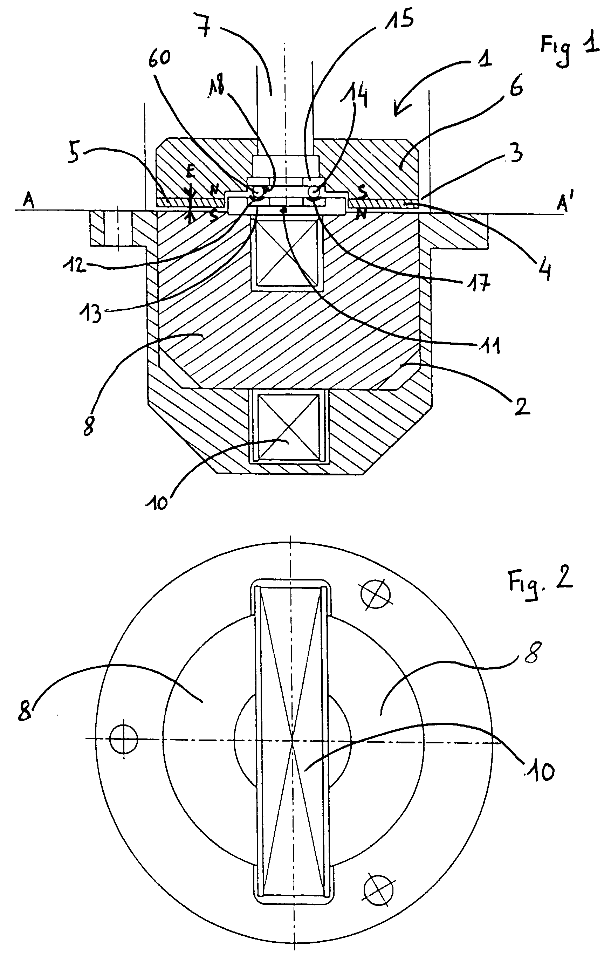

La figure 1 représente une vue en coupe axiale d'un actionneur selon un premier mode de réalisation de la présente invention.

L'actionneur est constitué par un organe mobile (1) et par un organe fixe (2). L'organe mobile comporte un aimant mince (3) en forme de disque NdFeB aimanté dans le sens de l'épaisseur. Il présente deux secteurs (4, 5) aimantés en sens inverse. Le disque aimanté (3) présente deux secteurs formant chacun un demi-disque s'étendant sur 180° lorsque l'on recherche la course maximale. Lorsqu'une course moindre est considérée comme satisfaisante, cet angle peut être réduit à environ 150° à 160°. Il peut être réalisé selon différentes méthodes connues dans l'état de la technique, par exemple par aimantation d'un disque en Néadym-Fer-Bore à l'aide d'une tête d'aimantation, ou par utilisation de deux demi disques préalablement aimantés. Si la course demandée permet d'utiliser des secteurs aimantés d'angle inférieur à π/N, il est préférable d'utiliser des pièces séparées plutôt que de laisser de grandes zones mortes dans l'aimant. Par exemple, dans le cas où N = 1, si la course demandée n'est que de 90°, on peut utiliser deux secteurs de 150° espacés de 30°.

Pour des actionneurs de faible coût et de faible couple par rapport à leur taille, il est possible d'utiliser des aimants permanents de type ferrite, qui sont toutefois plus fragiles.

L'aimant est collé dans le mode de réalisation décrit sur un circuit rotorique mobile (6), solidaire de l'axe d'accouplement (7). La partie statorique fixe (2) et la partie rotorique mobile (6), sont constituées par injection d'un mélange de poudre de fer et d'un liant plastique, liant qui est ensuite évaporé dans un four pour provoquer un retrait homothétique. Ces pièces peuvent également être réalisées en fer doux usiné, fritté et/ou moulé, ou encore en un alliage fer-nickel massif.

L'organe fixe (2) est bobiné à spires jointives. Le plan médian de la bobine (10) correspond au plan transversal de l'actionneur contenant l'axe de rotation. Cette solution n'est toutefois adaptée que pour des actionneurs dont le stator comporte deux pôles. Pour des actionneurs dont le stator comporte quatre pôles, l'Homme du Métier dispose dans l'état de la technique de différentes solutions de bobinages dont un exemple sera explicité dans la suite de la présente description.

Les dimensions du circuit magnétique fixe (8) et du circuit magnétique mobile (6) sont déterminées de façon connue de façon à permettre le passage de la totalité du flux magnétique en jeu pour les ampères-tours fixes, compte tenu des conditions de température, sans saturation.

La liaison entre la partie mobile (1) et la partie fixe (2) est réalisée par une butée à bille (11) définissant l'entrefer. La butée à bille (11) est constituée par une bague (12) présentant un chemin de roulement (13) annulaire avec lequel coopèrent des billes (14). Ces billes (14) sont disposées entre ce premier chemin de roulement (13) et une seconde bague (15) solidaire de l'organe mobile (1). Le chemin de roulement (13) présente une gorge (17) contribuant au positionnement des billes. La bague opposée au dit chemin de roulement présente une surface (18) plane de contact avec les billes. Le diamètre extérieur de la butée à billes est sensiblement égal au diamètre interne de l'alésage de l'aimant afin de bien encaisser les efforts s'exerçant sur l'axe (7).

Suivant l'application envisagée, seul l'un des chemins de roulement, ou les deux chemins de roulement présenteront une gorge. Lorsque l'axe d'accouplement est susceptible d'être soumis à une force radiale importante, il est préférable de privilégier la composante "couple" par rapport à la composante "déplacement latéral". Cette situation se produit notamment lorsque l'axe d'accouplement coopère avec la charge par l'intermédiaire d'un engrenage. Dans ce cas, on retiendra de préférence la solution dans laquelle chacun des chemins de roulement présente une gorge.

Par contre, lorsque l'actionneur est destiné à entraîner une aiguille indicatrice ou à entraîner en direct l'axe du volet de réglage de l'admission d'air d'un moteur à explosion, il est préférable d'adopter la solution dans laquelle un seul des chemins de roulement présente une gorge, afin de permettre un déplacement latéral et limiter l'usure dans le temps résultant de la compensation du couple angulaire.

La figure 2 représente une vue selon une coupe transversale AA'. Dans un plan différent, on a représenté le circuit magnétique fixe (8) muni d'un bobinage (10).

Le fonctionnement de l'actionneur est le suivant : l'organe mobile (1) tend à se déplacer jusqu'à ce que le potentiel des aimants et des pôles magnétiques s'ajoutent. En considérant le rapport P/E où :
- P est la largeur du pôle mesurée sur le rayon moyen et
- E désigne la dimension de l'entrefer, c'est-à-dire la distance entre les parties en fer du stator et du rotor, en l'absence de l'aimant.

Ce rapport P/E doit être choisi grand de façon à définir un actionneur fournissant un couple constant sur une proportion notable de l'angle théorique maximal de fonctionnement avec un courant de signe donné, égal à π/N. Pour N = 1, et P/E = 10, on peut définir une course à couple constant supérieure à 110°. En pratique, P/E doit être supérieur à 4.

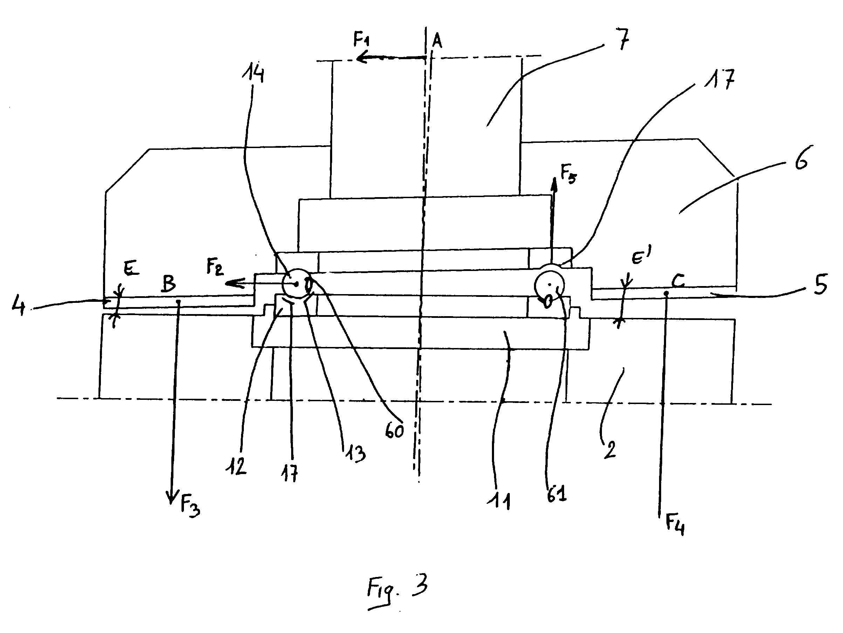

La figure 3, qui représente une vue partielle de l'actionneur, montre ce qui se passe lorsqu'un effort F₁ radial est appliqué à A sur l'axe de sortie (7). Nous admettrons dans ce qui suit que F₁ fasse basculer le rotor (1) autour du centre O de l'une des billes (60). L'entrefer se réduit du coté de ladite bille (60) et est augmenté du coté opposé. La force F₁ se décompose au point O d'une part en une force F₂ = F₁ qui tend à faire sortir la bille (60) de sa gorge (17) et d'autre part en un couple. La force F₂ n'est pratiquement jamais suffisante pour faire glisser une bague de la butée à bille par rapport à l'autre. Par ailleurs, la force d'attraction F₃ s'exerçant à l'endroit ou l'entrefer est le plus faible est supérieure à la force F₄ s'exerçant à l'endroit diamétralement opposé. Toutefois, le levier OC étant beaucoup plus grand que le levier OB, le couple dû à F₄ l'emporte largement sur le couple inverse dû à F₃. C'est la raison pour laquelle on aura intérêt à choisir un chemin de roulement aussi grand que possible compte tenu de la proximité de l'aimant. On peut ainsi optimiser le phénomène de retour à une position d'équilibre car on raccourcit le bras de levier OB et on augmente le bras de levier OC. Comme la force magnétique d'attraction F₄ est généralement beaucoup plus grande que la force parasite F₁, le bras de levier étant du même ordre de grandeur, le rotor ne peut pas rester dans la position basculée représentée en figure 3 et tend à revenir en contact avec la bille (61) de centre O' jusqu'à ce que la force de réaction F₅ se manifeste pour que la somme des couples appliqués soit nulle, et donc que le rotor soit dans sa position stable normale. L'actionneur décrit peut donc parfaitement fonctionner avec un palier constitué d'une seule butée à billes. Si les forces parasites F₁ restent faibles dans tous les cas, on peut même réaliser un actionneur dans lequel l'une des bagues de roulement est dépourvue de gorge.

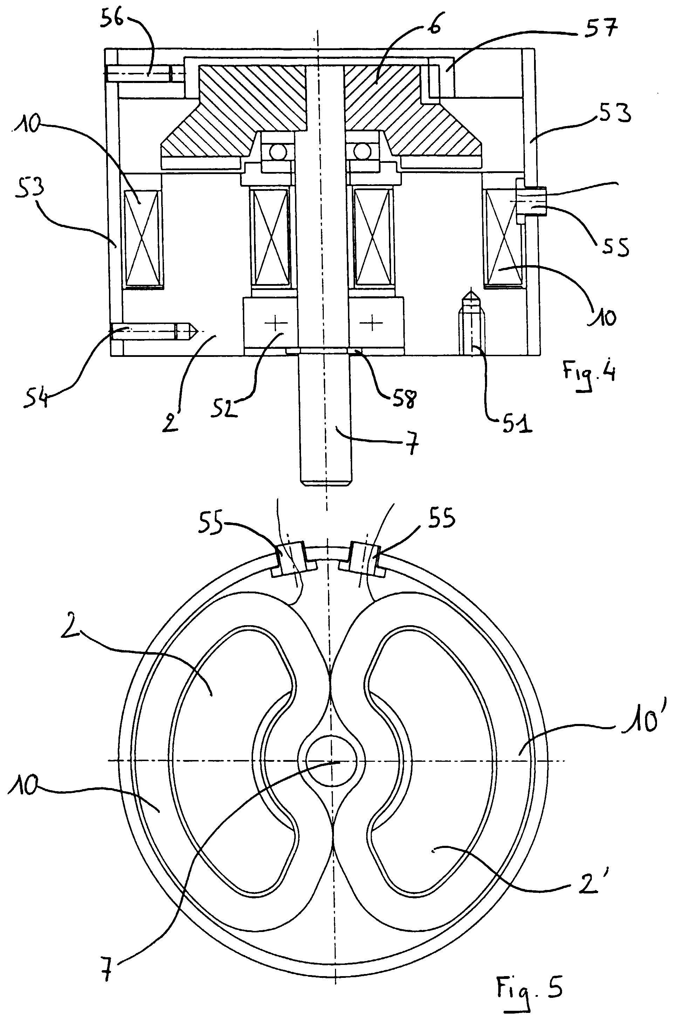

La figure 4 représente une variante de réalisation de l'actionneur selon l'invention facilitant la fixation de l'actionneur sur un support mécanique. L'axe d'accouplement (7) s'étend non pas du côté opposé à l'organe fixe (2) comme dans l'exemple précédemment décrit, mais au contraire traverse l'organe fixe (2). Ce mode de réalisation permet de réduire l'épaisseur de l'actionneur selon l'invention. La partie rotorique mobile (6) est de forme conique de façon à réduire l'inertie de l'organe mobile, tout en permettant un passage satisfaisant du flux magnétique. L'actionneur selon cette variante permet par ailleurs une fixation relativement aisée sur un support. Cette fixation est réalisée par l'intermédiaire de trous de fixation (51) taraudés, prévus dans la masse de la partie statorique (2). Un palier (52) limite le déplacement latéral de l'axe (7). L'actionneur est monté dans un boîtier (53) en matière plastique moulée ou en métal non magnétique ou très peu magnétique. Une goupille (54) immobilise la partie statorique fixe (2) par rapport audit boîtier (53). Un orifice latéral (55) permet le passage des fils d'alimentation des bobinages électriques (10). Le couvercle (56) du boîtier (53) présente une butée (57) limitant l'angle de rotation du rotor (1). Un circlips (58) monté sur l'axe (7) limite l'amplitude du déplacement axial et évite qu'une force appliquée trop brutalement sur l'extrémité de l'axe ne provoque des dommages au niveau de l'organe mobile ou du couvercle. Ce circlips n'est toutefois pas destiné à positionner axialement l'organe mobile (6) par rapport à la partie statorique (2), ce positionnement étant essentiellement assuré par les phénomènes magnétiques explicités précédemment.

La figure 5 représente une vue en coupe transversale de l'actionneur selon la variante décrite dans ce qui précède, et qui concerne le cas où N = 1, c'est-à-dire où l'actionneur comporte deux parties polaires. Cette figure montre plus particulièrement la forme des parties polaires de la partie statorique fixe (2), ainsi que la forme des bobines (10) et (10'). Les deux bobines (10) et (10') entourent respectivement les deux parties polaires (2) et (2') en évitant le canal de passage de l'axe (7).

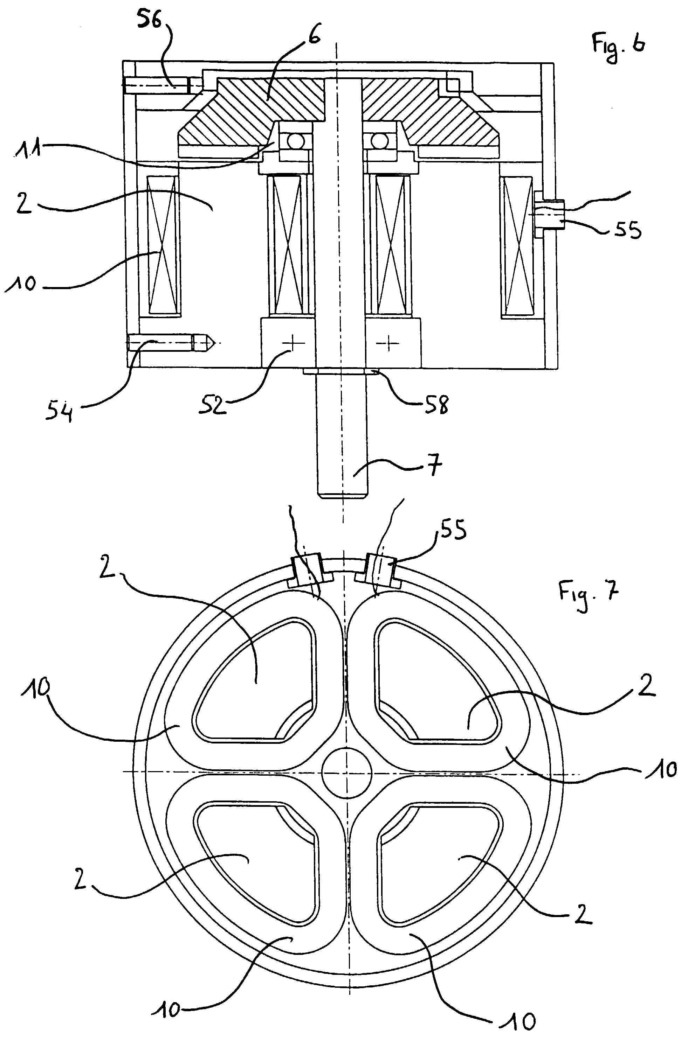

Les figures 6 et 7 représentent une troisième variante de réalisation où N = 2, c'est-à-dire à 4 pôles. La vue en coupe axiale présente peu de différences par rapport à la vue en coupe axiale du mode de réalisation précédent. La figure 7 montre la forme de la partie statorique fixe (2) et des bobinages (10) constitués de quatre lobes entourant les quatre pôles de la partie statorique (2) en évitant le canal central de passage de l'axe (7).

## Revendications

1. Actionneur électromagnétique monophasé à couple constant comportant un organe fixe constitué par un premier circuit magnétique statorique réalisé en un matériau de haute perméabilité magnétique excité par au moins une bobine d'excitation (10), et un organe mobile (1) constitué par un disque (3) aimanté axialement et présentant 2N paires de pôles magnétiques aimantés en sens alterné, l'aimantation étant pratiquement uniforme, ledit disque aimanté (3) étant accolé à un second circuit magnétique (6) réalisé en un matériau de haute perméabilité magnétique ledit organe mobile étant muni d'un axe d'accouplement (7), caractérisé en ce que la liaison entre l'organe fixe (1) et l'organe mobile (2) autorise au moins un jeu axial de l'axe d'accouplement (7) dans la direction opposée à l'organe statorique fixe (2) et en ce que le diamètre du disque aimanté (3) est sensiblement identique au diamètre des pôles des circuits statoriques, la compensation du jeu entre l'organe fixe (2) et l'organe mobile (1) étant assurée par attraction magnétique de la partie fixe sur l'organe mobile et en ce que la liaison entre l'organe fixe (1) et l'organe mobile (2) autorise en outre un déplacement radial de l'axe d'accouplement dû aux efforts parasites liés aux tolérances de fabrication et/ou d'accouplement.

2. Actionneur électromagnétique monophasé selon la revendication 1, caractérisé en ce que l'organe mobile coopère avec l'organe fixe par l'intermédiaire d'une butée à bille (11) limitant le déplacement de l'organe mobile (1) en direction de l'organe fixe (2), ladite butée à bille étant sensiblement coplanaire avec le plan passant par l'extrémité des pôles statoriques, le disque comportant un évidement central d'une section au moins égale à la section de la butée à bille.

3. Actionneur électromagnétique monophasé selon la revendication 2, caractérisé en ce que l'axe d'accouplement (7) traverse l'organe fixe (2).

4. Actionneur électromagnétique selon l'une quelconque des revendications précédentes, caractérisé en ce que l'organe fixe (2) présente un alésage sensiblement cylindrique dans lequel est placé une pièce de liaison en un matériau non magnétique, ladite pièce de liaison coopérant avec la butée à bille et isolant magnétiquement la butée à bille de l'organe fixe (2).

5. Actionneur électromagnétique selon l'une quelconque des revendications précédentes, caractérisé en ce que le rapport P/E est supérieur à 4, P étant la largeur du pôle mesuré sur le rayon moyen et E désignant la distance comprise entre les deux pièces statoriques.

## Patentansprüche

1. Einphasiges elektromagnetisches Betätigungsgerät mit konstantem Moment umfassend ein feststehendes Organ bestehend aus einem ersten magnetischen Statorkreis aus einem Material mit hoher magnetischer Permeabilität, erregt durch mindestens eine Erregerwicklung (10), und ein mobiles Organ (1) bestehend aus einer axial magnetisierten, 2N Paar alternierend magnetisierten magnetische Pole aufweisenden Scheibe (3), wobei die Magnetisierung praktisch gleichmäßig ist, und die magnetisierte Scheibe (3) mit einem zweiten Magnetkreis (6) verbunden ist, welcher aus einem Material mit hoher magnetischer Permeabilität gebildet ist, wobei das mobile Organ mit einer Kupplungsachse (7) versehen ist,
dadurch gekennzeichnet,
daß die Verbindung zwischen dem festen Organ (2) und dem mobilen Organ (1) mindestens ein axiales Spiel der Kupplungsaxe (7) in der dem festen Statororgan (2) entgegengesetzten Richtung ermöglicht,
daß der Durchmesser der magnetisierten Scheibe (3) im wesentlichen identisch ist mit dem Durchmesser der Pole der Statorkreise, wobei der Ausgleich im Spiel zwischen dem festen Organ (2) und dem mobilen Organ (1) durch die magnetische Anziehungskraft des festen Teils auf das mobile Organ gewährleistet ist und
daß die Verbindung zwischen dem festen Organ (2) und dem mobilen Organ (1) überdies eine durch die Störkräfte aufgrund der Herstell- und/oder Kupplungstoleranzen verursachte radiale Bewegung der Kupplungsachse ermöglicht.

2. Einphasiges elektromagnetisches Betätigungsgerät nach Anspruch 1,
dadurch gekennzeichnet,
daß das mobile Organ mit dem festen Organ mittels eines Kugelanschlags (11) zusammenwirkt, welcher die Bewegung des mobilen Organs (1) in Richtung auf das feste Organ (2) begrenzt, wobei der Kugelanschlag im wesentlichen auf einer Ebene liegt mit der durch das Ende der Statorpole liegenden Ebene, und wobei die Scheibe eine zentrale Höhlung aufweist, deren Durchmesser mindestens gleich ist mit dem Durchmesser des Kugelanschlags.

3. Einphasiges elektromagnetisches Betätigungsgerät nach Anspruch 2,
dadurch gekennzeichnet,
daß sich die Kupplungsachse (7) durch das feste Organ (2) erstreckt.

4. Einphasiges elektromagnetisches Betätigungsgerät nach einem der vorangegangenen Ansprüche,
dadurch gekennzeichnet,
daß das feste Organ (2) eine im wesentlichen zylindrische Bohrung aufweist, in welcher ein Verbindungsteil aus einem nichtmagnetischen Material angeordnet ist, welches Verbindungsteil mit dem Kugelanschlag zusammenwirkt und den Kugelanschlag von dem festen Organ (2) isoliert.

5. Einphasiges elektromagnetisches Betätigungsgerät nach einem der vorangegangenen Ansprüche,
dadurch gekennzeichnet,
daß das Verhältnis P/E größer 4 ist, wobei P die Breite des auf dem mittleren Radius gemessenen Pols und E den Abstand zwischen den beiden Statorteilen darstellen.

## Claims

1. A constant torque monophase electromagnetic actuator including a fixed member provided with a first statoric magnetic circuit made from a high magnetic permeability material which is excited by a least a field coil (10), and a movable member (1) provided with an axially magnetized disk (3) and having 2N pairs of magnetic poles with alternated magnetic orientation, the magnetization thereof being substantially uniform, said magnetized disk (3) being attached to a second magnetic circuit (6) made from a high magnetic permeability, with said movable member being provided with a coupling shaft (7), characterized in that linking between said fixed member (2), and said movable member (1) allows said coupling shaft (7) to be submitted to a least an axial play in the direction away from said fixed statoric member (2), and in that said magnetic disk (3) diameter is substantially equal to that of said statoric circuit poles, the play between said fixed member (2) and said movable member (1) being compensated due to fixed portion thereof being magnetically attracted to said movable member, and in that linking between said fixed member (2) and said movable member (1) further allows said coupling shaft to be radially displaced due to stray strains relating to manufacturing and coupling tolerances.

2. The monophase electromagnetic actuator as recited in claim 1, characterized in that said movable member cooperates with said fixed member through a thrust ball bearing (11) which limits said movable member (1) displacement in the direction of said fixed member (2), said thrust ball bearing being substantially coplanar with a plane passing through statoric poles end portions, with said disk showing a central recess with a cross-section area at least equal to said thrust ball bearing cross-section area.

3. The electromagntic actuator as recited in claim 2, characterized in that said coupling shaft (7) passes through said fixed member (2).

4. The electromagnetic actuator as recited in any preceding claim, characterized in that said fixed member (2) includes a substantially cylindric bore wherein a nonmagnetic material linking part is arranged, said linking part cooperating with said thrust ball bearing and acting to magnetically isolate said thrust ball bearing from said fixed member (2).

5. The electromagnetic actuator as recited in any preceding claim, characterized in that P/E ratio is higher than 4, with P being the pole width as measured along the median radius and E designating the distance between both statoric pieces.
